# EUROPEAN PATENT SPECIFICATION

(11) **EP 0 889 856 B1**
(45) Date of publication and mention of the grant of the patent: **22.08.2001**
(21) Application number: 97919914.8
(22) Date of filing: 25.03.1997
(51) Int. Cl.: C03B 32/00, C03C 17/00, C03C 14/00, C03C 23/00, G02B 5/30

(54) **POLARIZING GLASSES HAVING INTEGRAL NON-POLARIZING REGIONS**
POLARISIERENDE GLÄSER MIT INTEGRIERTEN NICHT POLARISIERENDEN ZONEN
VERRES DE POLARISATION COMPORTANT DES ZONES INTEGREES NON POLARISANTES

(30) Priority: 28.03.1996 US 14619 P; 04.04.1996 US 14856 P
(43) Date of publication of application: 13.01.1999
(73) Proprietor: CORNING INCORPORATED, Corning, N.Y. 14831 (US)
(72) Inventor: BORRELLI, Nicholas, F., Elmira, NY 14905 (US); MOORE, Chag, B., Corning, NY 14830 (US); SACHENIK, Paul, A., Corning, NY 14830 (US)
(74) Representative: Marchant, James Ian
(86) International application number: US9704870
(87) International publication number: WO9735812

(56) References cited:
- US-A- 3 737 341
- US-A- 4 042 449
- US-A- 4 155 734
- US-A- 4 155 735
- US-A- 4 259 406
- US-A- 4 304 584
- US-A- 4 908 054
- US-A- 5 039 214
- US-A- 5 425 046

## Description

### BACKGROUND OF THE INVENTION

Hydrogen firing at elevated temperatures to change the color of glasses whose compositions contain reducible ions is well known. A notable commercial application of that technique is found in the Coming Incorporated eyewear product lines marketed under the SERENGETI® and CPF® trademarks. The color changes induced are attributed, to the reduction of a portion of the silver and lead ions respectively, in the glass to the atomic state.

Several methods have been suggested for making polarizing glasses. For example, one such method is to redraw a glass above its softening temperature. The glass contains a separate phase which is elongated by the redraw process. The thermal treatment which leads to the phase separation is usually carried out before the redraw process. In a particular version of the above process, the separated phase is initially spectrally non-absorbing material such as AgClBr, CuClBr, AgI, CuI or copper/cadmium halides, which must be subsequently modified to create a desired dichroic property necessary for the polarizing effect. This is accomplished by treating the stretched glass in hydrogen gas at elevated temperatures for sufficient time to effect the chemical reduction of the spectrally non-absorbing materials to their corresponding metal. The chemical reduction process is a combined process involving both the diffusion of hydrogen in the glass, and the chemical reaction of the hydrogen with the halide phase.

It is known that the chemical reaction proceeds very fast relative to the hydrogen diffusion which leads to the condition of a sharp boundary between the reduced region near the surface, and the unreduced region below the surface. The polarizing behaviour derives from the reduced layer. Also, when the polarizing glass is heated to the vicinity of 500°C for any prolonged period of time, the elongated particles re-spheridize and the polarizing property is lost. That is, the elongated particle returns to its spherical shape. This is explained by the fact that once the glass is soft enough, the interfacial forces act to undo what the redrawing forces had accomplished.

For certain applications, it is desirable to have the polarizing properties restricted to localized regions of the glass. Accordingly, it is the object of the present invention to provide a method of partially or fully blocking the effect of hydrogen reduction over a portion of a glass surface.

US-A-4,304,584 relates to the production of polarizing glasses by a method in which glasses containing silver halide particles are elongated under stress so that the silver halide particles are elongated in the direction of the stress. The glass is then rendered polarizing by heat treatment in a reducing atmosphere. It is suggested that polarizing patterns can be produced in the glass by applying impervious masking material before the reduction forming treatment.

### SUMMARY OF THE INVENTION

The present invention provides a method of forming polarizing and non-polarizing regions in a glass comprising a reducible elongated phase, said method comprising the steps of:
(a) depositing a layer of reducing gas-blocking material selected from the group consisting of dense metal, oxide and semiconductor on a surface region of said glass for protecting said surface region of said glass from a reducing gas, said layer of reducing gas-blocking material being formed by a method selected from the group consisting of sputtering, thermal evaporation and chemical vapour deposition;
(b) exposing said glass to a reducing gas atmosphere to polarize said glass not protected by said layer of reducing gas-blocking material; and
(c) removing said layer of reducing gas-blocking material to reveal the underlying non-polarizing region;
   whereby regions not protected by said reducing gas-blocking material are rendered polarizing.

According to one aspect, the following further steps are carried out prior to exposing the glass to the reducing gas atmosphere:
(d) applying a layer of photoresist on a surface of said layer of reducing gas-blocking material;
(e) patterning and developing said layer of photoresist to obtain a pattern of said photoresist, wherein said patterning step is achieved by photolithography; and
(f) transferring said pattern of said photoresist into said layer of reducing gas-blocking material, wherein said transferring step is achieved by an etching process.

As used herein:
"reducing atmosphere" refers to a gaseous atmosphere in which the chemical potential of oxygen is low. Examples of reducing gases include hydrogen, hydrazine vapor, cracked ammonia, deuterium and forming gas (i.e. a mixture of hydrogen and an inert gas, for example, H₂/He and H₂/N₂).

### BRIEF DESCRIPTION OF THE DRAWINGS

Figs 1a to 1c are schematic diagrams illustrating one inventive method of forming a polarizing glass having at least one non-polarizing region;
Figs 2a to 2d are schematic diagrams illustrating another inventive method of forming a pattern of polarizing and non-polarizing glass, by a photolithographic process.

### DETAILED DESCRIPTION OF THE INVENTION

We have found, and disclose herein, that a polarizing glass having non-polarizing regions can be formed by use of a hydrogen blocking film. For ease of discussion, the layer of reducing gas-blocking material will be referred to herein as "hydrogen-blocking film" even though it is understood that in addition to hydrogen, other reducing gases such as cracked ammonia, deuterium or forming gas (i.e. a mixture of H₂ with He, N₂ or Ar) may be used.

As contemplated by the present methods, the polarizing glass contains a reducible elongated phase such as, AgClₓBr₁₋ₓ, CuClₓBr₁₋ₓ, where x has the value between 0 and 1, or phase separated Pb-borate glass. Other useful reducible phases include AgI, CuI and Cu/Cd halides.

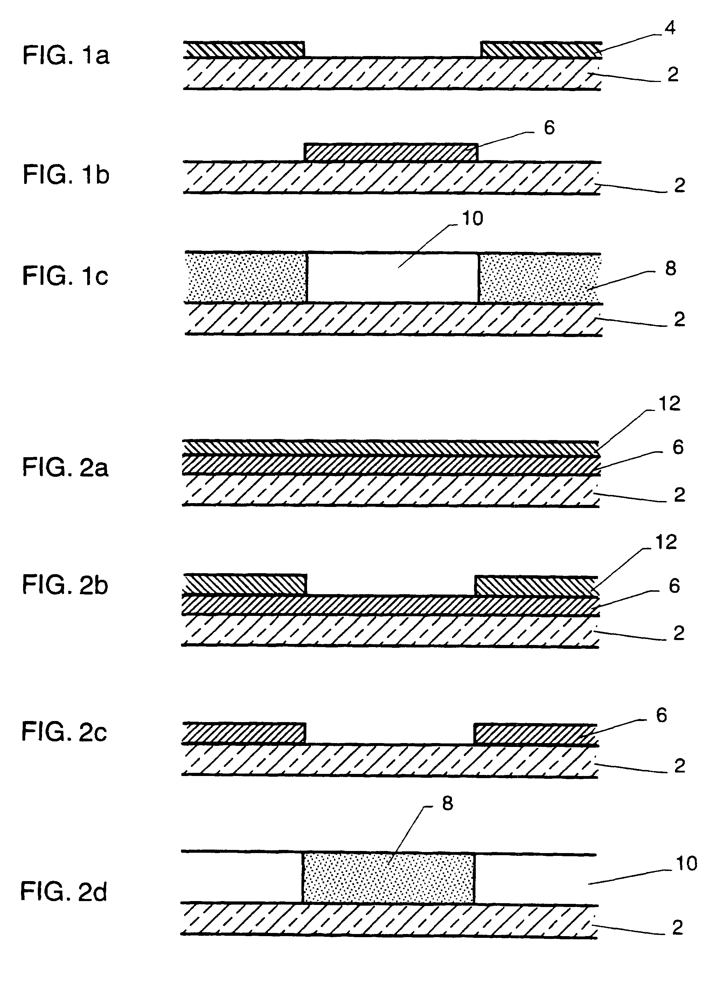

The invention will now be described with reference to the drawings. In Figs 1a to 1c, a thin layer of material 6, preferably a dense film of material such as Cr, Mo or their oxides is formed on the surface of a non-polarizing glass 2 to retard the reduction process. Thus a non-polarizing region 10 is formed in a glass having stretched or elongated particles by using a reducing gas and a patterned film which is capable of retarding penetration of the reducing gas. In this embodiment, the non-polarizing region is formed by:
1) providing a glass 2 having a layer of reducible elongated phase;
2) protecting a region of the glass by forming a layer of blocking material 6 on the surface of the region of the glass to be protected, the material being capable of blocking or preventing penetration of a reducing gas (Fig 1b);
3) subjecting the unprotected region 8 of the glass to a reducing gas atmosphere to reduce the reducible phase in the unprotected region 8 and thereby render said region polarizing; and
4) removing the layer of blocking material 6 from the protected region to reveal the underlying non-polarizing glass (Fig 1c).

The preferred reducing gas can be H₂, cracked ammonia, forming gas and D₂. If forming gas is used, then the hydrogen content of the forming gas mixture is preferably at least 0.1%, more preferably, at least 5%, and most preferably, at least 10%. The higher the hydrogen content of the forming gas mixture, the lower the pressure and the less the time required to reduce the reducible phase in the glass. The preferred forming gas is H₂/N₂.

The layer of hydrogen-blocking material may be patterned using any method. A particularly useful method of selectively forming the thin film layer is by placing a shadow mask 4 above the glass surface, such that the mask shadows or protects certain regions of the glass (Fig. 1). A patterned layer of blocking material is thereby formed on the unmasked or unprotected regions of the glass through holes or openings in the shadow mask.

Another useful method of patterning the thin film blocking layer is by using photolithography (Fig. 2). In this patterning process, (i) a thin film of hydrogen-blocking material 6 is deposited over the entire surface of a reducible glass 2, that is, a glass having a layer of stretched or elongated particles; (ii) a thin photoresist layer 12 is then applied to the surface of the hydrogen-blocking material 6 (Fig. 2a); (iii) the photoresist is lithographically patterned using a mask and developed (Fig. 2b); (iv) the patterned photoresist image is then transferred into the layer of blocking material by an etching process (dry or wet); and (5) the photoresist is removed leaving a patterned film blocking material (Fig. 2c). To form a region of non-polarizing glass, the assembly of Fig. 2c is exposed to a reducing gas atmosphere as above to render the glass polarizing in the unprotected region. Then the blocking material is removed to form a glass having polarizing 8 and non-polarizing 10 regions as shown in Fig. 2d.

We have found that the particular method used to deposit the thin layer of material is a key aspect of the invention. In particular, to avoid the formation of pinholes in the layer, the film is deposited, preferably in a Class 1000 (or better) clean room environment, by sputtering or other suitable methods.

The choice of the hydrogen blocking material and its deposited thickness is made on the basis of how deep a reduced layer in the glass is required for any given application. In other words, the property of the deposited film, through the combined property of density and thickness, must be sufficient to retard the diffusion of H₂ for the time/pressure/temperature required to produce a sufficient reduced depth in the glass, in turn, providing the desired contrast. For example, the depth to which the silver or copper halide phase is chemically reduced to silver, or copper (i.e., the thickness of the polarizable layer), determines the contrast of the polarizer. It has been shown that the reduced depth is proportional to the square root of the H₂ pressure and the time of treatment, as well as an exponential function of the temperature.

The contrast is defined as the ratio of the transmittance in the passing direction (perpendicular to the stretched direction, T₀) to the transmittance in the absorbing direction (parallel to the stretching direction). One can mathematically express this in terms of the thickness of the polarizing layer by the equation, contrast = T₀/exp(-αd) where d is the polarizing film thickness. The coefficient, α, depends on the wavelength of light and the degree to which the glass was stretched. For a given application, α, and T₀ are determined experimentally, and the thickness of the polarizing film can be determined for any desired contrast. In one particularly useful embodiment, at a wavelength of 640 nm, a thickness of 28µm is required to achieve a contrast of 100.

The particular choice of a material for use in the blocking of hydrogen, such as, Cr, Mo, Ta, Zn, W, may depend on the method used to form the thin layer and the related deposition variables. Other useful hydrogen blocking materials include the noble metals such as Au, Rh, Pd, Pt, and Ir. For example, where the layer is formed by film deposition method, the relevant variables may include the porosity of the deposited film, which depends on the specific deposition method and system, the film adherence, and how it varies with thickness, the thermal mismatch, and how it relates to thickness. These latter issues relate to the quality of the film that is produced, pinholes, cracks, and other features that would allow H₂ to penetrate through the film. A summary of illustrative results using several hydrogen blocking materials films is shown in Table 1. For this particular case the high contrast was desired at a wavelength of 640nm.

### EXAMPLES

### Hydrogen Blocking

a) A Mo film of the order of 1 *µ*m thick was deposited through a patterned shadow mask onto a stretched glass surface. The mask was maintained in intimate contact with the sample. The metal patterned sample was then treated in pure H₂ atmosphere at 420°C, 101.3kPa (1 atm), for 17 hours. A polarizing layer having a depth of about 30 *µ*m was formed in the unmasked region, while the masked region remained non-polarizing. The Mo film was then removed by a suitable acid. If a single sided patterned polarizing effect is desired, the entire back side can be covered with Mo to protect it. If desired, a two-sided product may be produced by applying the same or a different pattern on the opposite side of the glass. In this example, the hydrogen-blocking material was applied by sputtering, in a Class 1000 clean room environment.
b) Same as above except that the hydrogen-blocking material was Cr, having a thickness of about 0.6 *µ*m. The H₂ treatment was at 420°C, at 101.3 kPa (1 atm), for 3 hours. The resulting polarizing layer had a depth of about 15 *µ*m.
c) Same as above except that the hydrogen-blocking layer was 1 *µ*m of ZnO. The H₂ treatment was 420°C for 3 hours, at 101.3 kPa (1 atm). Thickness of the polarizing layer was 15 *µ*m.

In a similar experiment, we found that Mo film having a thickness as low as 0.5 *µ*m can be treated in a hydrogen environment at 101.3 kPa (1 atm) for 420°C for 16 hours without any bleed through. That is, the hydrogen did not penetrate through the Mo film into the underlying glass. We have found that the higher the pressure, the more likely the hydrogen is to bleed through the film. Also, the denser the film the less likely the hydrogen is to bleed through the film. For a given hydrogen-blocking material, the optimal reducing gas treatment conditions (time, temperature, pressure) necessary to minimize or reduce bleed through can be determined by experimentation. For example, if a forming gas mixture having low hydrogen content is used, then the reducing gas treatment can be carried out at high pressure with minimal effect from any resulting bleed through.

### THE PREFERRED EMBODIMENT

In the preferred embodiment, the metal film used to inhibit the H₂ penetration were delineated using a shadow mask. Samples were prepared using two dense metals - Cr and Mo. Thin layers of the hydrogen-blocking metal were deposited using either a CVC DC sputtering system or a MRC in-line sputter system, both in a Class 1000 clean room. If desired, a film of the reducing gas blocking material may also be applied to the other surface of the polarizing glass prior to the hydrogen treatment. The deposition conditions were as follows:

| | Cr | Mo |
|---|---|---|
| Pressure (mT) | 1 | 10 |
| Power (W) | 1000 | 1000 |
| Deposition rate (A/s) | 3.5 | 15 |
| Rotation number | 5.0 | |
| Belt speed (cm(in)/min) | | 25.4(10) |
| Passes | | 6 |

The glass used in all cases was Polarcor™ (available from Corning Incorporated), with a 680 nm center peak wavelength. The samples were ground and polished to a thickness of 0.5 nm before hydrogen treatment. The results are summarized in the table below.

**TABLE 1**

| H₂-block. Mat' l | Thickness of H₂ block. material (*µ*m) | H₂ treatment Temp/time/pressure (°C/hours/kPa(atm)) | Polarizing film Thickness (*µ*m) |
|---|---|---|---|
| Cr | 0.4-0.6 | 415/3/101.3(1) | 15 |
| Mo | 1.0 | 415/16/101.3(1) | 30 |
| Mo | 1.0 | 415/7/101.3(1) | 20 |
| Mo | 1.0 | 415/17/101.3(1) | 30 |
| Mo | 1.0 | 415/3/101.3(1) | 8 |
| ZnO | 1.0 | 415/4/101.3(1) | 15 |
| Mo | 1.0 | 350/1.25/506.5(5) | 30 |

## Claims

1. A method of forming polarizing and non-polarizing regions in a glass comprising a reducible elongated phase, said method comprising the steps of:
(a) depositing a layer of reducing gas-blocking material selected from the group consisting of dense metal, oxide and semiconductor on a surface region of said glass for protecting said surface region of said glass from a reducing gas, said layer of reducing gas-blocking material being formed by a method selected from the group consisting of sputtering, thermal evaporation and chemical vapour deposition;
(b) exposing said glass to a reducing gas atmosphere to polarize said glass not protected by said layer of reducing gas-blocking material; and
(c) removing said layer of reducing gas-blocking material to reveal the underlying non-polarizing region;
whereby regions not protected by said reducing gas-blocking material are rendered polarizing.

2. The method of claim 1, which comprises the following further steps carried out prior to exposing the glass to the reducing gas atmosphere:
(d) applying a layer of photoresist on a surface of said layer by reducing gas-blocking material;
(e) patterning and developing said layer of photoresist to obtain a pattern of said photoresist, wherein said patterning step is achieved by photolithography; and
(f) transferring said pattern of said photoresist into said layer of reducing gas-blocking material, wherein said transferring step is achieved by an etching process.

3. The method of claim 1 or 2, wherein said layer of reducing gas-blocking material is deposited through and patterned by a shadow mask.

4. The method of any of claims 1 to 3, wherein said reducing gas atmosphere comprises a reducing gas at a temperature of 350°C to 425°C and a pressure in the range of 101.3 to 2026.5 kPa (1 to 200 atm).

5. The method of any of claims 1 to 4, wherein said reducing gas is selected from the group consisting of H₂, D₂, cracked ammonia, and forming gas.

6. The method of any of claims 1 to 5, wherein said dense metal is selected from the group consisting of Cr, Mo, Ta, W, Zn, Au, Rh, Pd, Pt and Ir.

7. The method of any of claims 1 to 5, wherein said oxide is selected from the group consisting of Cr, Mo, Ta, W, Zn, Au, Rh, Pd, Pt and Ir.

8. The method of any of claims 1 to 7, wherein said layer of reducing gas-blocking material has a thickness in a range of 0.01 to 5 *µ*m.

## Patentansprüche

1. Verfahren zur Ausbildung polarisierender und nicht-polarisierender Bereiche in einem Glas mit einer reduzierbaren gestreckten Phase, wobei das Verfahren die Schritte aufweist:
a) Abscheiden einer Schicht von Reduktionsgas-blockierendem Material, ausgewählt aus der Gruppe, bestehend aus Schwermetall (dense metal), Oxid und Halbleiter, auf einen Oberflächenbereich des Glases, um den Oberflächenbereich des Glases vor einem Reduktionsgas zu schützen, wobei die Schicht des Reduktionsgas-blockierenden Materials durch ein Verfahren, ausgewählt aus der Gruppe, bestehend aus Sputtern, thermischer Verdampfung und chemischer Gasphasenabscheidung, gebildet wird;
b) Einwirken einer Reduktionsgas-Atmosphäre auf das Glas, um das nicht durch die Schicht des Reduktionsgas-blockierenden Materials geschützte Glas zu polarisieren; und
c) Entfernen der Schicht von Reduktionsgas-blockierendem Material, um den darunter liegenden, nicht-polarisierenden Bereich frei zu legen;
wodurch Bereiche, die nicht durch das Reduktionsgas-blockierende Material geschützt sind, polarisierend gemacht werden.

2. Verfahren nach Anspruch 1, das die folgenden weiteren Schritte aufweist, die vor dem Einwirken der Reduktionsgas-Atmosphäre auf das Glas durchgeführt werden:
d) Aufbringen einer Photoresistschicht auf eine Oberfläche der Schicht von Reduktionsgas-blockierendem Material;
e) mit einem Muster versehen und Entwickeln der Photoresistschicht, um ein Muster von dem Photoresist zu erhalten, wobei der Schritt des Musterns mittels Photolithographie ausgeführt wird; und
f) Überführen des Photoresistmusters in die Schicht des Reduktionsgas-blockierenden Materials, wobei der Überführungsschritt mittels eines Ätzprozesses ausgeführt wird.

3. Verfahren nach Anspruch 1 oder 2, wobei die Schicht des Reduktionsgas-blockierenden Materials durch eine Abdeckmaske abgeschieden und mit einem Muster versehen wird.

4. Verfahren nach einem der Ansprüche 1 bis 3, wobei die Reduktionsgas-Atmosphäre ein Reduktionsgas bei einer Temperatur von 350° C bis 425° C und einem Druck im Bereich von 101,3 bis 2026,5 kPa (1 bis 200 atm) aufweist.

5. Verfahren nach einem der Ansprüche 1 bis 4, wobei das Reduktionsgas aus der Gruppe ausgewählt ist, bestehend aus H₂, D₂, gecracktem Ammoniak und Formiergas.

6. Verfahren nach einem der Ansprüche 1 bis 5, wobei das Schwermetall aus der Gruppe ausgewählt ist, bestehend aus Cr, Mo, Ta, W, Zn, Au, Rh, Pd, Pt und Ir.

7. Verfahren nach einem der Ansprüche 1 bis 5, wobei das Oxid aus der Gruppe ausgewählt ist, bestehend aus Cr, Mo, Ta, W, Zn, Au, Rh, Pd, Pt und Ir.

8. Verfahren nach einem der Ansprüche 1 bis 7, wobei die Schicht des Reduktionsgas-blockierenden Materials eine Dicke im Bereich von 0,01 bis 5 µm aufweist.

## Revendications

1. Un procédé de formation de régions polarisantes et non polarisantes dans un verre comprenant une phase allongée réductible, ledit procédé comprenant les étapes suivantes :
(a) déposer une couche de matière faisant barrière à un gaz réducteur, choisie dans le groupe formé par un métal dense, un oxyde et un semi-conducteur, sur une région de surface dudit verre pour protéger ladite région de surface dudit verre contre un gaz réducteur, ladite couche de matière faisant barrière à un gaz réducteur étant formée par un procédé choisi dans le groupe formé par la pulvérisation cathodique, l'évaporation thermique et le dépôt chimique en phase vapeur ;
(b) exposer ledit verre à une atmosphère de gaz réducteur pour polariser ledit verre non protégé par ladite couche de matière faisant barrière à un gaz réducteur ; et
(c) éliminer ladite couche de matière faisant barrière à un gaz réducteur pour révéler la région non polarisante sous-jacente ;
les régions non protégées par ladite matière faisant barrière à un gaz réducteur étant ainsi rendues polarisantes.

2. Le procédé de la revendication 1, qui comprend les étapes supplémentaires suivantes, exécutées avant l'exposition du verre à l'atmosphère de gaz réducteur :
(d) appliquer une couche de photoréserve sur une surface de ladite couche de matière faisant barrière à un gaz réducteur ;
(e) conformer et développer ladite couche de photoréserve pour obtenir un motif de ladite photoréserve, ladite étape de conformation étant réalisée par photolithographie ; et
(f) transférer ledit motif de ladite photoréserve à ladite couche de matière faisant barrière à un gaz réducteur, ladite étape de transfert étant réalisée par un procédé de gravure.

3. Le procédé de la revendication 1 ou 2, dans lequel ladite couche de matière faisant barrière à un gaz réducteur est déposée à travers un masque perforé et conformée par celui-ci.

4. Le procédé de l'une quelconque des revendications 1 à 3, dans lequel ladite atmosphère de gaz réducteur comprend un gaz réducteur à une température de 350°C à 425°C et une pression dans l'intervalle de 101,3 à 2026,5 kPa (1 à 200 atm).

5. Le procédé de l'une quelconque des revendications 1 à 4, dans lequel ledit gaz réducteur est choisi dans le groupe formé par H₂, D₂, l'ammoniac craqué et un mélange d'hydrogène et de gaz inerte.

6. Le procédé de l'une quelconque des revendications 1 à 5, dans lequel ledit métal dense est choisi dans le groupe formé par Cr, Mo, Ta, W, Zn, Au, Rh, Pd, Pt et Ir.

7. Le procédé de l'une quelconque des revendications 1 à 5, dans lequel ledit oxyde est choisi dans le groupe formé par ceux de Cr, Mo, Ta, W, Zn, Au, Rh, Pd, Pt et Ir.

8. Le procédé de l'une quelconque des revendications 1 à 7, dans lequel ladite couche de matière faisant barrière à un gaz réducteur a une épaisseur comprise dans l'intervalle de 0,01 à 5 µm.
